Europäisches Patentamt

European Patent Office

Office européen des brevets

(11) Publication number : **0 477 017 A2**

(12) **EUROPEAN PATENT APPLICATION**

(21) Application number : 91308563.5

(22) Date of filing : 19.09.91

(51) Int. Cl.⁵ : **B60C 13/04**

(30) Priority : **21.09.90 JP 252852/90**

(43) Date of publication of application :
**25.03.92 Bulletin 92/13**

(84) Designated Contracting States :
**DE FR GB**

(71) Applicant : **SUMITOMO RUBBER INDUSTRIES LIMITED**
**1-1 Tsutsuicho 1-chome Chuo-ku Kobe-shi Hyogo-ken (JP)**

(72) Inventor : **Wada, Mitsuhiro**
**1-14-24, Fukae Minami, Higashinari-ku Osaka-shi, Osaka (JP)**

(74) Representative : **Stewart, Charles Geoffrey SP TYRES UK LIMITED Tyre Technical Division**
**Fort Dunlop, Erdington, Birmingham B24 9QT (GB)**

(54) **Pneumatic tyres.**

(57)  A pneumatic tyre characterised by $\underline{n}$ projecting rubber blocks spaced at equal distances on the outside surface of a sidewall (12), each of which has its centre located in a position generally corresponding to the point where the tyre width is at maximum, the length $L_1$ of each of said rubber blocks (2) in the radial direction of the tyre, its width $L_2$ in the circumferential direction and its height $\underline{h}$ satisfying the following conditions :

$$L_1 = R - (r + d + 60) \pm 30 \text{ (mm)} \quad (1)$$
$$n \geq |2\pi/\cos^{-1}(1 - L_1/R_o| + 1 \quad (2)$$
$$h \geq R_o \tan(2\pi/n) \cdot \sin 20° \quad (3)$$
$$5 \text{ mm} \leq L_2 \leq 50 \text{ mm} \quad (4)$$

where
R is the radius of the tyre = (outside diameter of the tyre)/2 (mm) ;
r is the radius of the wheel rim = (diameter of the wheel rim)/2 (mm) ;
d is the height of the rim flange (mm) ; and
$R_o$ is the distance from the centre O of the tyre to the outer radial end of each rubber block (mm).

Fig. 1

EP 0 477 017 A2

Jouve, 18, rue Saint-Denis, 75001 PARIS

This invention relates to a pneumatic tyre and in particular to the sidewalls of such tyres.

Pneumatic tyres generally are composed of an annular tread that is to contact the road surface, two sidewalls extending radially one from each edge of the tread, and two annular beads at the inner periphery of the sidewalls for mounting to a wheel rim.

When a tyre having this structure contacts a kerbstone on either side of the road during use, the sidewall may sometimes be damaged by abrasion with the kerbstone (this phenomenon is often referred to as a "road hazard"). Since the sidewalls need to deform when the pneumatic tyre is deflated by load they are of relatively small thickness and such a road hazard can potentially break the carcass of the tyre and its sidewalls. Such damage to the sidewalls of a pneumatic tyre involving abrasion by a kerbstone is in most cases generated when the tyre contacts the kerbstone at a small angle (usually 20° or less, particularly 10° or less) with respect to the direction in which the vehicle is running.

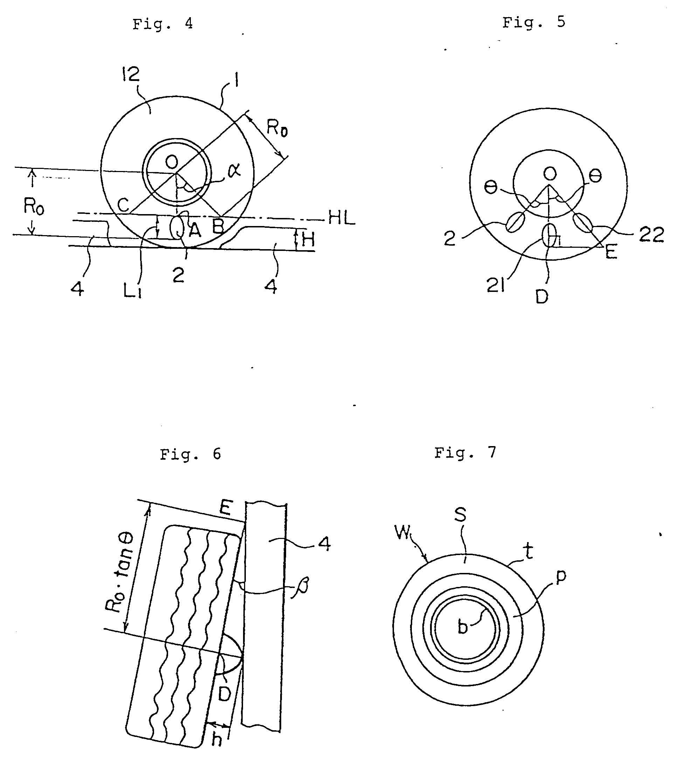

A conventional pneumatic tyre protected against this road hazard is shown by W in Figure 7; a continuous protector rib p concentric with the tread t is formed on the outside surface of a sidewall s in such a way that the rib p contacts a kerbstone so the sidewall s itself will not be contacted, thereby preventing the occurrence of damage to the sidewall s.

However, a pneumatic tyre having such a protector rib on the outer surface of the sidewall portion has the problem of the increased rubber weight due to the provision of the continuous protector rib.

An object of the present invention is to provide a pneumatic tyre that is protected against the road hazard without undue increase in the tyre weight.

According to one aspect of the present invention a pneumatic tyre is provided having $n$ projecting rubber blocks spaced at equal distances on the outside surface of a sidewall, each of which has its centre located in a position generally corresponding to the point where the tyre width is at maximum, the length $L_1$ of each of said rubber blocks in the radial direction of the tyre, its width $L_2$ in the circumferential direction and its height $h$ satisfying the following conditions:

$$L_1 = R - (r + d + 60) \pm 30 \text{ (mm)} \quad (1)$$
$$n \geqq \left| 2\pi/\cos^{-1}(1 - L_1/R_o) \right| + 1 \quad (2)$$
$$h \geqq R_o \tan(2\pi/n) \cdot \sin 20° \quad (3)$$
$$5 \text{ mm} \leqq L_2 \leqq 50 \text{ mm} \quad (4)$$

where

$R$ is the radius of the tyre = (outside diameter of the tyre)/2 (mm);

$r$ is the radius of the wheel rim = (diameter of the wheel rim)/2 (mm);

$d$ is the height of the rim flange (mm); and

$R_o$ is the distance from the centre O of the tyre to the outer radial end of each rubber block (mm).

As already mentioned in connection with the description of the prior art, the road hazard, or a phenomenon in which the outer surface of the sidewall position of a pneumatic tyre is damaged by abrasion with a linear kerbstone in most cases occurs when the tyre contacts a kerbstone at a small angle with respect to the direction in which the vehicle is running. Since only a part of the sidewall portion makes contact with the kerbstone, the pneumatic tyre of the present invention which is constructed in the manner described above ensures positive protection against the road hazard by preventing the portions of the sidewall other than the rubber blocks from contacting the kerbstone when the tyre approaches the kerbstone at a small angle to have kerbstone contacted by the rubber blocks.

Further aspects of the invention will be apparent from the following description, by way of example only, in conjunction with the attached drawings in which:

Figure 1 shows a side view of a pneumatic tyre incorporating the basic concept of the present invention;

Figure 2(a) shows an enlarged plan view of a rubber block formed on the pneumatic tyre of the present invention;

Figure 2(b) shows an enlarged side view of the same rubber block;

Figures 3 to 5 are side views illustrating how the size, number and other parameters of rubber blocks to be formed on the pneumatic tyre of the present invention are determined;

Figure 6 is a plain view illustrating several of the parameters relating to the rubber blocks; and

Figure 7 is a side view of a prior art pneumatic tyre having a protector rib.

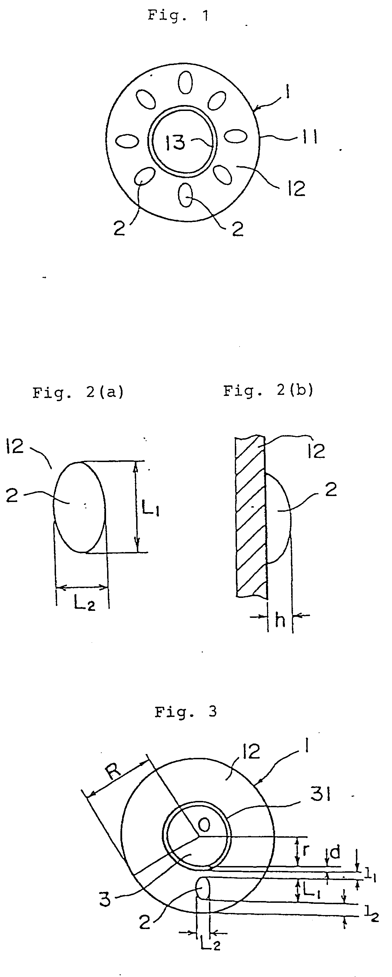

As shown in Figure 1, the pneumatic tyre of the present invention indicated by 1 comprises an annular tread 11, a sidewall 12 that extends radially from each side of the tread 11, and a bead 13 that is formed on the inner radial end of each sidewall portion 12. The tyre 1 is characterised by having $n$ (preferably $n \geqq 2$) projecting rubber blocks 2 on the outer surface of the sidewall portion 12.

Details of the rubber blocks 2 are described more specifically with reference to Figures 2 to 6. First, as shown in Figure 2, each rubber block 2 has a generally elliptical outer shape with its length in the radial direction of the pneumatic tyre 1 being $L_1$, the width in the circumferential direction being' $L_2$ and the maximum height in the direction of rotating axis being $h$.

Figure 3 shows the pneumatic tyre 1 mounted on a wheel rim 3. The length $L_1$ of the rubber block 2 in the radial direction provides coverage for the "weak" portion of the sidewall 12, namely where the road hazard usually has the damaging effect. The radius R of the pneumatic tyre 1 is expressed by the following equation:

$$R = L_1 + r + d + l_1 + l_2 \text{ (mm)}$$

wherein

r represents the radius of the rim 3;

d represents the height of the rim flange 31;

$l_1$ represents the distance from the outer radial end of the rim flange 31 to the rubber block 2; and

$l_2$ represents the distance from the rubber block 2 to the outer circumference of the pneumatic tyre 1.

Hence, the length $L_1$ of the rubber block 2 in the radial direction is calculated by the following equation:

$$L_1 = R - ( r + d + l_1 + l_2) \text{ (mm)}$$

In order to ensure that the rubber block 2 is located in a position generally corresponding to the area where the tyre width is at maximum while, at the same time, providing adequate coverabe for the weak portion of the sidewall 12, the parameters $l_1$ and $l_2$ take on values within the respective ranges of 10 to 40mm and 20 to 50mm. Therefore, the equation for calculating the length $L_1$ of the rubber block 2 in the radial direction is represented by the equation (1):

$$L_1 = R - (r + d + 60) \pm 30 \text{ (mm)} \quad (1)$$

Suppose here that the pneumatic tyre 1 is alongside a kerbstone 4 having a width H and a single rubber block 2 is located on a straight line perpendicular to the road surface and the top surface of the kerbstone 4, as shown in Figure 4. In this case, in order to ensure that the rubber block 2 makes contact with the kerbstone 4, and thereby preventing contact between the sidewall portion 12 and the kerbstone 4, at least one rubber block 2 is provided within a sector of the tyre defined by a central angle BOC, wherein B and C are the points at which a circle drawn with a radius $R_o$ from the centre O crosses a horizontal line HL, provided that the centre O coincides with the centre of the pneumatic tyre, that the horizontal line HL which passes through the inner radial end of the rubber block 2 crosses at point A the line connecting the centre O and the centre of the rubber block 2, and $R_2$ is the distance from the centre O to the outer radial end of the rubber block 2.

However, if only one rubber block 2 is provided within the sector defined by the central angle BOC, a contact between said single rubber block 2 and the kerbstone 4 can potentially cause the sidewall portion 12 to contact the kerbstone 4 in a position distant from said rubber block 2, particularly at the point intermediate between two adjacent rubber blocks 2. To avoid this possibility the distance between adjacent rubber blocks 2 is set so that the sidewall 12 is divided into two or more sectors, each defined by a central angle that is equal to or smaller than (angle BOC)/2 = angle AOB = angle AOC = $\alpha$. Also at least one rubber block 2 is provided within each sector to ensure that not less than two rubber blocks 2 are present in each sector defined by a central angle BOC including the area of contact with the road surface, and thereby preventing the sidewall portion 12 from contacting the kerbstone 4.

Angle $\alpha$ is calculated by the following equation:

$$\alpha = \cos^{-1}\{R_o - L_1)/R_o\}$$
$$= \cos^{-1}(1 - L_1/R_o)$$

Hence, in order to ensure that at least two rubber blocks 2 will always be present in each sector that is defined by the central angle BOC including the area of contact with the road surface, the number $n_o$ of rubber blocks 2 is given by the following equation:

$$n_o = |2\pi/\alpha| + 1 = |2\pi/\cos^{-1}(1 - L_1/R_o)| + 1$$

Since $n_o$ is equal to or smaller than the number $n$ of rubber blocks 2 provided (that is, $n \geqq n_o$), $n$ is represented by the following expression:

$$n \geqq |2\pi/\cos^{-1}(1 - L_1/r_o)| + 1 \quad (2)$$

By providing $n$ rubber blocks 2 at equal distances, with $n$ being computer by the expression ( 2 ), the road hazard can be effectively prevented, since the sidewall portion 12 will not make direct contact with the kerbstone 4 as the rubber blocks 2 will instead contact the kerbstone.

Figures 5 and 6 show the case where $n$ rubber blocks are equally spaced, with two adjacent rubber blocks 21 and 22 forming a central angle of $\theta$ ($\theta = 2\pi/n$).

When the sidewall portion 12 is approaching the kerbstone 4 at an angle of $\beta$ and if there is one rubber block 21 on a straight line that is dropped from the centre O perpendicularly to the plane of contact with the road surface, the part of the sidewall 12 that approaches the closest to the kerbstone 4 is defined by point E at which point the straight line connecting the adjacent rubber block 22 and the centre O crosses a horizontal line that passes through the outer end D of the rubber block 21 and that crosses at right angles with the straight line dropped from the centre O perpendicularly to the plane of contact with the road surface. Hence, the length of the straight line DE is expressed by Ro $\tan\theta$.

Since a maximum value of $\beta$ is 20° and a value of $\beta$ is preferably 5° to 10°, the minimum necessary height $ho$ of each rubber block 21 is given by the following equation:

$$ho = Ro \tan\theta \cdot \sin 20°$$

Therefore, if the height $h$ of the rubber block 2 satisfies the following condition:

$$h \geqq Ro \tan(2\pi/n) \cdot \sin 20° \quad (3),$$

the sidewall portion 12 will in no case make direct contact with the kerbstone 4, and thereby preventing the occurrence of the road hazard. However, if the height $h$ of individual rubber blocks 2 exceeds 20 mm, their effectiveness in weight reduction will decrease. Hence, in order to avoid this problem, the value of $h$ is adjusted to be no greater than 20 mm.

If the width $L_2$ of each rubber block 2 in the circumferential direction is 5 mm or less, the effectiveness in preventing the road hazard is reduced. On the other hand, if $L_2$ exceeds 50 mm, the effectiveness of rubber blocks in weight reduction will also decrease. Under these circumstances, $L_2$ should satisfy the following condition:

$$5 \text{ mm} \leqq L_2 \leqq 50 \text{ mm} \quad (4)$$

The rubber blocks 2 to be used in the present invention need only to satisfy the aforementioned conditions (1) to (4) and individual rubber blocks 2 may have different sizes as long as the overall weight balance is attained.

The pneumatic tyre 1 which is constructed in the manner described above ensures positive protection against the road hazard by preventing the portions of the sidewall 12 other than the rubber blocks 2 from contacting a kerbstone 4 when the tyre approaches the kerbstone at a small angle by causing the kerbstone to contact the rubber blocks.

Having the construction detailed in the foregoing pages, the pneumatic tyre of the present invention offers the following advantage: when the pneumatic tyre approaches a kerbstone on the road at a small angle, the rubber blocks will contact with the kerbstone but the portions of the sidewall other than the rubber blocks will not contact the Kerbstone thus ensuring positive protection against the road hazard.

While the invention has been described in detail and with reference to specific embodiments thereof, it will be apparent to one skilled in the art that various changes and modifications can be made therein without departing from the spirit and scope thereof.

## Claims

1. A pneumatic tyre characterised by $\underline{n}$ projecting rubber blocks spaced at equal distances on the outside surface of a sidewall (12), each of which has its centre located in a position generally corresponding to the point where the tyre width is at maximum, the length $L_1$ of each of said rubber blocks (2) in the radial direction of the tyre, its width $L_2$ in the circumferential direction and its height $\underline{h}$ satisfying the following conditions:

$$L_1 = R - (r + d + 60) \pm 30 \text{ (mm)} \quad (1)$$
$$n \geqq \left| 2\pi / \cos^{-1}(1 - L_1/R_o) \right| + 1 \quad (2)$$
$$h \geqq R_o \tan(2\pi/n) \cdot \sin 20° \quad (3)$$
$$5 \text{ mm} \leqq L_2 \leqq 50 \text{ mm} \quad (4)$$

where

$R$ is the radius of the tyre = (outside diameter of the tyre)/2 (mm);

$r$ is the radius of the wheel rim = (diameter of the wheel rim)/2 (mm);

$d$ is the height of the rim flange (mm); and

$R_o$ is the distance from the centre O of the tyre to the outer radial end of each rubber block (mm).

2. A pneumatic tyre having $\underline{n}$ projecting rubber block as claimed in Claim 1, characterised in that $\underline{h}$ is no greater than 20 mm.

Fig. 1

Fig. 2(a)

Fig. 2(b)

Fig. 3

Fig. 4

Fig. 5

Fig. 6

Fig. 7